# EUROPÄISCHE PATENTSCHRIFT

(11) **EP 4 251 688 B1**
(45) Veröffentlichungstag und Bekanntmachung des Hinweises auf die Patenterteilung: **25.09.2024**
(21) Anmeldenummer: 21811096.3
(22) Anmeldetag: 25.11.2021
(51) Int. Cl.: C08K 3/22, C08K 9/02, C08L 69/00

(54) **POLYCARBONAT-ZUSAMMENSETZUNGEN ENTHALTEND TITANDIOXID UND EINE TITANDIOXID-BESCHICHTUNG UMFASSENDE GLAS-PLÄTTCHEN**
POLYCARBONATE COMPOSITION COMPRISING TITANIUM DIOXIDE AND GLASS FLAKES HAVING A TITANIUM DIOXIDE COATING
COMPOSITIONS DE POLYCARBONATE COMPRENANT DU DIOXYDE DE TITANE ET DES FLOCONS DE VERRE REVÊTUES DE DIOXYDE DE TITANE

(30) Priorität: 30.11.2020 EP 20210659
(43) Veröffentlichungstag der Anmeldung: 04.10.2023
(73) Patentinhaber: Covestro Deutschland AG, 51373 Leverkusen (DE)
(72) Erfinder: WEHRMANN, Rolf, 47800 Krefeld (DE); BOUMANS, Anke, 47551 Bedburg-Hau (DE)
(74) Vertreter: Levpat
(86) Internationale Anmeldenummer: PCT/EP2021/082976
(87) Internationale Veröffentlichungsnummer: WO 2022/112406

(56) Entgegenhaltungen:
- US-A1- 2012 220 708
- US-A1- 2012 220 709
- US-A1- 2013 202 827

## Beschreibung

Gegenstand der Erfindung sind Titandioxid enthaltende Polycarbonat-basierte Zusammensetzungen mit hoher Reflexion. Die Erfindung betrifft außerdem die Verbesserung der Reflexion Titandioxidenthaltender Zusammensetzungen. Weiterhin betrifft die vorliegende Erfindung Formteile aus diesen Zusammensetzungen, etwa für Gehäuse bzw. Gehäuseteile oder sonstige Elemente im EE- und IT-Bereich, z.B. für Blenden und Schalter für die Automobilinnenbeleuchtung und insbesondere für Reflektoren von Beleuchtungseinheiten wie LED-Lampen oder LED-Arrays sowie Automobilfront- und Rückscheinwerfer oder Blinker.

Aus dem Stand der Technik ist bekannt, Kunststoffen wie Polycarbonat Titandioxid hinzuzufügen, um die Reflexion zu verbessern.

CN 109867941 A etwa beschreibt ein reflektierendes Polycarbonat-Material, welches Titandioxid, ein flüssiges Silicon und weitere polymere Bestandteile enthält.

TW 200743656 A offenbart flammgeschützte, halogenfreie, reflektierende Polycarbonatzusammensetzungen, die neben Titandioxid anorganische Füllstoffe wie Ton oder Silica sowie weitere organische Komponenten wie optische Aufheller, Perfluoralkylenverbindungen und Metallsalze von aromatischen Schwefelverbindungen enthalten.

US2012220708 betrifft eine Polycarbonat-Harz-Zusammensetzung, die aus (A) einem aromatischen Polycarbonat-Harz; (B) Titanoxid mit einem durchschnittlichen Partikeldurchmesser von 0,05 bis 6 µm; und (C) (C-1) glänzenden Partikeln mit einem durchschnittlichen Partikeldurchmesser von 10 µm oder mehr und weniger als 60 µm, und (C-2) glänzenden Partikeln mit einem durchschnittlichen Partikeldurchmesser von 60 bis 300 µm besteht, wobei die glänzenden Partikel (C) mindestens eines aus der Gruppe bestehend aus Glimmer, Metallpartikeln, Metallsulfidpartikeln, Partikeln mit einer Oberfläche, die mit einem Metall oder einem Metalloxid beschichtet ist, und Glas-Plättchen mit einer Oberfläche, die mit einem Metall oder einem Metalloxid beschichtet ist, umfassen. 1

Die Reflexionswerte, die mit herkömmlichen Zusammensetzungen erreicht werden, erfüllen zunehmend nicht mehr die Erwartungen des Marktes. Es besteht für Bauteile, z.B. für Reflektoren, eine Nachfrage nach Zusammensetzungen mit immer höherer Reflexion, um die eingesetzte Energie so gut wie möglich zu nutzen.

Zur Erreichung hoher Reflexionsgrade sind aber hohe Mengen an Titandioxid erforderlich. Dies ist von Nachteil, da Titandioxid zum Abbau der Polycarbonatmatrix führen kann, womit es zu Schmelzeinstabilitäten kommen kann und die Viskosität des Compounds abnimmt, wodurch sich auch die thermischen und mechanischen Eigenschaften verschlechtern.

Die Menge an Titandioxid wirkt sich auch sehr deutlich auf den Preis der Polycarbonat-Zusammensetzungen aus, so dass es wünschenswert ist, die Reflexion durch andere Maßnahmen als durch den Zusatz noch größerer Mengen Titandioxid zu erhöhen.

Optische Aufheller, die zugesetzt werden könnten, haben wiederum den Nachteil, dass sie bei Einsatz zu einer nicht-linearen Reflexionskurve führen, was zu in einem blauen Farbstich des Materials führen kann, der als störend empfunden wird.

Aufgabe der vorliegenden Erfindung war es daher, Titandioxid-haltige, Polycarbonat-basierte Zusammensetzungen mit verbesserter Reflexion sowie entsprechende Formteile aus diesen Zusammensetzungen bereitzustellen, wobei die Zusammensetzungen bei verbesserter Reflexion bevorzugt kein signifikant schlechteres Fließverhalten bei der Verarbeitung aufweisen sollten und/oder auch ohne störenden Farbstich sein sollten.

Überraschenderweise wurde gefunden, dass Titandioxid-haltige Zusammensetzungen auf Basis von Polycarbonat erhöhte Reflexionswerte aufweisen, wenn eine Titandioxid-Beschichtung umfassende Glas-Plättchen (Glass Flakes) in sehr geringer Konzentration enthalten sind. Mengen von 0,5 Gew.-% führen bereits zu einer merklichen Verschlechterung der Reflexion. Außerdem sind je nach eingesetzten Glasplättchen bereits deutliche glitzernde, glänzende Effekte oder metallisch aussehende Oberflächen zu beobachten. Üblicherweise werden solche Glas-Plättchen sonst in Mengen von mehreren Gewichtsprozent eingesetzt, um als Effektpigment in transparenten oder opaken Kunststoffen wirken zu können. Weitere übliche Anwendungen der Glasplättchen finden sich in der Kosmetikindustrie, beispielsweise in Lippenstiften, Eyelinern oder Gesichtspudern. Sie werden auch als Bestandteil von Druckfarben bei der Flaschen- oder Dosenlackierung als Effektpigment eingesetzt.

Beim Einsatz in Polycarbonatzusammensetzungen, die Titandioxid als Weißpiment enthalten, ist es wichtig, dass die Glasplättchen eine geringe Eigenfarbe aufweisen und mit der Polycarbonatmatrix verträglich sind. Eine zu hohe Eigenfarbe führt zu einem Anstieg des Yellowness-Index und damit zu einer Verringerung der Reflexion. Ist die Verträglichkeit mit der Polycarbonatmatrix nicht gegeben, führt dies zum Polymerabbau bei der Compoundherstellung als auch bei der thermoplastischen Verarbeitung wie Spritzguss oder Extrusion, was ebenfalls mit einem unerwünschten Anstieg des Yellowness-Index und einer Veränderung der rheologischen Eigenschaften verbunden ist. Weiterhin verschlechtern sich die thermischen und mechanischen Eigenschaften der Bauteile.

Erfindungsgemäß werden zur überraschenden Steigerung der Reflexion eine Titandioxid-Beschichtung umfassende Glas-Plättchen in sehr geringer Konzentration von 0,001 bis 0,25 Gew.-%, bevorzugt 0,004 bis 0,2 Gew.-%, weiter bevorzugt 0,004 bis 0,1 Gew.-%, besonders bevorzugt 0,006 bis 0,010 Gew.-%, eingesetzt. Dabei ist die Konzentration der eine Titandioxid-Beschichtung umfassenden Glas-Plättchen (im Folgenden ggf. als Glas-Plättchen bezeichnet) so gering, dass ihr Charakter, als Effektpigment zu wirken, nicht visuell sichtbar wird und der brillantweiße Eindruck der Spritzgusskörper unverfälscht erhalten bleibt. Das Fließverhalten der Zusammensetzungen wird hierbei nicht signifikant beeinflusst und die gute Verarbeitbarkeit im Spritzguss bleibt erhalten.

Erfindungsgemäße thermoplastische Zusammensetzungen sind daher solche, enthaltend
A) 44 Gew.-% bis 96,999 Gew.-% aromatisches Polycarbonat,
B) 3,0 Gew.-% bis 30,0 Gew.-% Titandioxid und
C) eine Titandioxid-Beschichtung umfassende Glas-Plättchen,
dadurch gekennzeichnet, dass
die Menge der Komponente C 0,001 Gew.-% bis 0,25 Gew.-% beträgt,
wobei sich die Mengenangaben jeweils auf das Gesamtgewicht der thermoplastischen Zusammensetzung beziehen.

Die Gewichts-%-Angaben beziehen sich auch nachfolgend jeweils auf das Gesamtgewicht der jeweiligen thermoplastischen Zusammensetzung, soweit nicht anders angegeben.

Erfindungsgemäß bevorzugte thermoplastische Zusammensetzungen enthalten
A) 44,8 Gew.-% bis 95,996 Gew.-% aromatisches Polycarbonat,
B) 4,0 Gew.-% bis 25 Gew.-% Titandioxid und
C) 0,004 Gew.-% bis 0,2 Gew.-% eine Titandioxid-Beschichtung umfassende Glas-Plättchen,
wobei sich die Mengenangaben jeweils auf das Gesamtgewicht der thermoplastischen Zusammensetzung beziehen.

Grundsätzlich können in den erfindungsgemäßen Zusammensetzungen auch ein oder mehrere Blendpartner enthalten sein. Als Blendpartner geeignete thermoplastische Polymere sind beispielsweise Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylatem, Poly- oder Copolymethacrylat wie z.B. Poly- oder Copolymethylmethacrylate (wie PMMA), sowie Copolymere mit Styrol wie z.B. transparentes Polystyrolacrylnitril (PSAN), thermoplastische Polyurethane und/oder Polymere auf Basis von zyklischen Olefinen (z.B. TOPAS^{®}, ein Handelsprodukt der Firma Ticona).

Weiter bevorzugte thermoplastische Zusammensetzungen bestehen aus
A) 44,8 Gew.-% bis 95,996 Gew.-% aromatischem Polycarbonat,
B) 4,0 Gew.-% bis 25 Gew.-% Titandioxid und
C) 0,004 Gew.-% bis 0,2 Gew.-% eine Titandioxid-Beschichtung umfassende Glasplättchen,
D) 0 bis 30 Gew.-% einem oder mehreren von den Komponenten B und C verschiedenen weiteren Additiv/en,
E) ggf. einem oder mehreren Blendpartnern,
wobei sich die Mengenangaben jeweils auf das Gesamtgewicht der thermoplastischen Zusammensetzung beziehen.

Noch weiter bevorzugte thermoplastische Zusammensetzungen bestehen aus
A) 44,8 Gew.-% bis 95,996 Gew.-% aromatischem Polycarbonat,
B) 4,0 Gew.-% bis 25 Gew.-% Titandioxid und
C) 0,004 Gew.-% bis 0,2 Gew.-% eine Titandioxid-Beschichtung umfassenden Glasplättchen,
D) 0 bis 30 Gew.-% einem oder mehreren von den Komponenten Bund C verschiedenen weiteren Additiv/en,
wobei sich die Mengenangaben jeweils auf das Gesamtgewicht der thermoplastischen Zusammensetzung beziehen.

Erfindungsgemäß besonders bevorzugte thermoplastische Zusammensetzungen bestehen aus
A) 64,8 Gew.-% bis 95,996 Gew.-% aromatischem Polycarbonat,
B) 4,0 Gew.-% bis 25 Gew.-% Titandioxid und
C) 0,004 Gew.-% bis 0,2 Gew.-% eine Titandioxid-Beschichtung umfassenden Glasplättchen,
D) 0 bis 10 Gew.-% eines oder mehrerer von den Komponenten B und C verschiedener weiterer Additiv/e,
wobei sich die Mengenangaben jeweils auf das Gesamtgewicht der thermoplastischen Zusammensetzung beziehen.

Ganz besonders bevorzugte thermoplastische Zusammensetzungen bestehen aus
A) 76,99 Gew.-% bis 94,994 Gew.-%, insbesondere 76,99 Gew.-% bis 94,993 Gew.-%, aromatischem Polycarbonat,
B) 5 Gew.-% bis 20 Gew.-% Titandioxid und
C) 0,006 Gew.-% bis 0,010 Gew.-% eine Titandioxid-Beschichtung umfassenden Glasplättchen,
D) 0 bis 3 Gew.-%, insbesondere 0,01 bis 3 Gew.-%, eines oder mehrerer von den Komponenten B und C verschiedener weiterer Additiv/e,
wobei sich die Mengenangaben jeweils auf das Gesamtgewicht der thermoplastischen Zusammensetzung beziehen.

Im Rahmen der vorliegenden Erfindung beziehen sich die angegebenen Gew.-% der Komponenten A, B, C und ggf. D - soweit nicht explizit anders angegeben - jeweils auf das Gesamtgewicht der Zusammensetzung. Es versteht sich, dass sämtliche in einer erfindungsgemäßen Zusammensetzung enthaltenen Komponenten, d.h. die Mengen der Komponenten A, B, C, ggf. D, ggf. weitere Komponenten, zusammen 100 Gew.-% ergeben. Die Zusammensetzung kann neben den Komponenten A, B, C, ggf. D grundsätzlich weitere Komponenten enthalten, sofern die zuvor erwähnten Kerneigenschaften der erfindungsgemäßen Zusammensetzungen erhalten bleiben. So können die Zusammensetzungen einen oder mehrere weitere Thermoplasten als Blendpartner (Komponente E) enthalten, welche durch keine der Komponenten A bis D abgedeckt sind. Ganz besonders bevorzugt enthalten die vorbeschriebenen Zusammensetzungen aber keine weiteren Komponenten, sondern die Mengen der Komponenten A, B, C und ggf. D, insbesondere in den beschriebenen bevorzugten Ausführungsformen, ergänzen sich zu 100 Gew.-%, d.h. die Zusammensetzungen bestehen aus den Komponenten A, B, C, ggf. D. Es versteht sich ferner, dass das Titandioxid gemäß Komponente B separat betrachtet wird gegenüber der Titandioxid-Beschichtung der Glasplättchen. Das Titandioxid der Beschichtung der Glasplättchen ist nicht durch den Mengenbereich der Komponente B erfasst.

Es versteht sich auch, dass die eingesetzten Komponenten übliche Verunreinigungen, die beispielsweise aus ihren Herstellungsprozessen herrühren, enthalten können. Es ist bevorzugt, möglichst reine Komponenten einzusetzen. Es versteht sich weiterhin, dass diese Verunreinigungen auch bei einer geschlossenen Formulierung der Zusammensetzung enthalten sein können. Die Verunreinigungen sind Teil des Gesamtgewichts der jeweiligen Komponente.

Gegenstand der Erfindung ist auch die Verbesserung der Reflexion, bevorzugt bestimmt gemäß ASTM E 1331-2015 bei einer Schichtdicke von 2 mm, von Titandioxid-haltigen Polycarbonat-Zusammensetzungen, durch den Zusatz von eine Titandioxid-Beschichtung umfassenden Glasplättchen. Die Verbesserung der Reflexion bezieht sich auf die entsprechenden Zusammensetzungen ohne eine Titandioxid-Beschichtung umfassende Glasplättchen. Unter "Verbesserung der Reflexion" wird jegliche Erhöhung des Reflexionswertes verstanden. Bevorzugt erfolgt die Verbesserung der Reflexion bei Erhaltung der Fließfähigkeit und des Glanzes der Referenzzusammensetzung. Insbesondere bevorzugt weist das Material keine glitzernde oder metallisch aussehende Oberfläche auf.

Die Reflexion der Zusammensetzungen, bei denen die Reflexion durch den Zusatz der Komponente C noch weiter verbessert wird, beträgt vor dem Zusatz der Komponente C bevorzugt mindestens 95 %, weiter bevorzugt mindestens 95,5 %, bestimmt nach ASTM E 1331-2015 bei einer Schichtdicke von 2 mm

Die als bevorzugt etc. für die erfindungsgemäße Zusammensetzung genannten Merkmale gelten selbstverständlich auch in Hinblick auf die erfindungsgemäße Verwendung. Bevorzugt werden daher insbesondere 0,006 bis 0,10 Gew.-% der Glas-Plättchen zur Verbesserung der Reflexion verwendet.

Die einzelnen Bestandteile der erfindungsgemäßen Zusammensetzungen sind im Folgenden noch näher erläutert:

### Komponente A

Unter "aromatischem Polycarbonat" oder auch nur "Polycarbonat" im erfindungsgemäßen Sinne werden sowohl aromatische Homopolycarbonate als auch aromatische Copolycarbonate verstanden. Dabei können die Polycarbonate in bekannter Weise linear oder verzweigt sein. Erfindungsgemäß können auch Mischungen von Polycarbonaten verwendet werden.

Erfindungsgemäße Zusammensetzungen enthalten als Komponente A mindestens 44 Gew.-%, vorzugsweise mindestens 44,8 Gew.-%, weiter bevorzugt mindestens 64,8 Gew.-%, noch weiter bevorzugt mindestens 76,99 Gew.-%, aromatisches Polycarbonat. Ein Anteil von mindestens 44 Gew.-%, bevorzugt mindestens 64,8 Gew.-%, aromatischem Polycarbonat an der Gesamtzusammensetzung bedeutet erfindungsgemäß, dass die Zusammensetzung auf aromatischem Polycarbonat basiert. Es kann ein einzelnes Polycarbonat oder eine Mischung mehrerer Polycarbonate vorliegen.

Die Herstellung der Polycarbonate, die in den Zusammensetzungen enthalten sind, erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopro-pylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 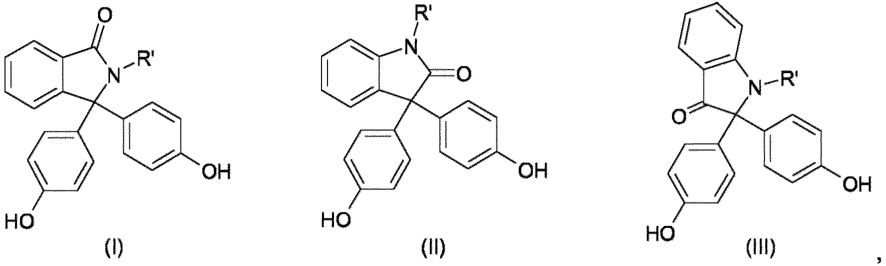 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (I), (II) und (III).

Diese und weitere geeignete Dihydroxyarylverbindungen sind z.B. in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phen-oxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, die Copolycarbonate auf Basis von 1,1-Bis-(4-hydroxyphenyl)-3,3,5-trimethylcyclohexan und 4,4'-Dihydroxydiphenyl sowie die Copolycarbonate auf Basis der beiden Monomere Bisphenol A und 1,1-Bis-(4-hydroxyphenyl)-3,3,5-trimethylcyclohexan, sowie von den Dihydroxyarylverbindungen der Formeln (I), (II) und (III) 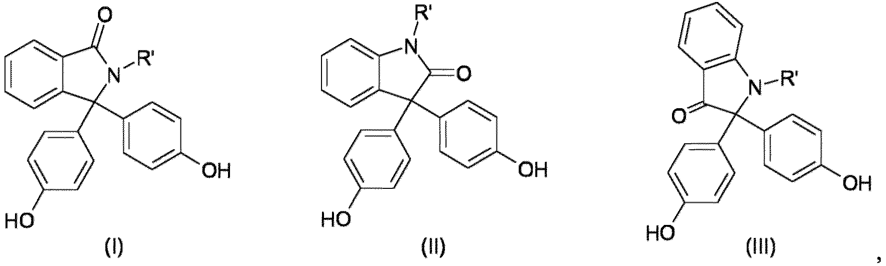 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A.

Bevorzugt sind auch Copolycarbonate, zu deren Herstellung Diphenole der allgemeinen Formel (1a) eingesetzt wurden: 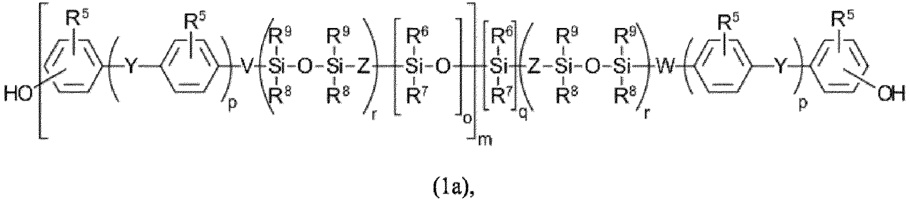 wobei
R⁵ für Wasserstoff oder C₁- bis C₄- Alkyl, C₁- bis C₃-Alkoxy, vorzugsweise für Wasserstoff; Methoxy oder Methyl, steht,
R⁶, R⁷, R⁸ und R⁹ jeweils unabhängig voneinander für C₁- bis C₄-Alkyl oder C₆- bis C₁₂-Aryl, vorzugsweise für Methyl oder Phenyl stehen,
Y für eine Einfachbindung, SOz-, -S-, -CO-, -O-, C₁- bis C₆-Alkylen, C₂- bis Cs-Alkyliden, C₆- bis C₁₂-Arylen, welches gegebenenfalls mit weiteren Heteroatome enthaltenden aromatischen Ringen kondensiert sein kann oder für einen C₅- bis C₆-Cycloalkylidenrest, der ein- oder mehrfach mit C₁-bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, steht,
V für Sauerstoff, C₂- bis C₆-Alkylen oder C₃- bis C₆-Alkyliden, bevorzugt für Sauerstoff oder C₃-Alkylen,
p, q und r jeweils unabhängig für 0 oder 1 stehen,
wenn q = 0 ist, W für eine Einfachbindung steht, wenn q = 1 und r = 0 ist, W für Sauerstoff, C₂- bis C₆-Alkylen oder C₃- bis C₆-Alkyliden, bevorzugt für Sauerstoff oder C₃-Alkylen steht,
wenn q = 1 und r = 1 ist, W und V jeweils unabhängig für C₂- bis C₆-Alkylen oder C₃- bis C₆-Alkyliden, bevorzugt C₃-Alkylen steht,
Z für ein C₁- bis C₆-Alkylen, bevorzugt C₂-Alkylen steht,
o für eine durchschnittliche Anzahl von Wiederholungseinheiten von 10 bis 500, bevorzugt 10 bis 100 steht, und
m für eine durchschnittliche Anzahl von Wiederholungseinheiten von 1 bis 10, bevorzugt 1 bis 6, weiter bevorzugt 1,5 bis 5 steht. Ebenso ist es möglich, dass Diphenole verwendet werden, in denen zwei oder mehrere Siloxanblöcke der allgemeinen Formel (1a) über Terephthalsäure und/oder Isophthalsäure miteinander unter Ausbildung von Estergruppen verknüpft sind.

Insbesondere bevorzugt sind (Poly)Siloxane der Formeln (2) und (3) 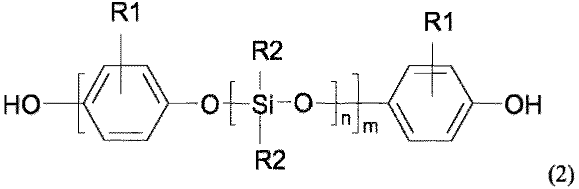 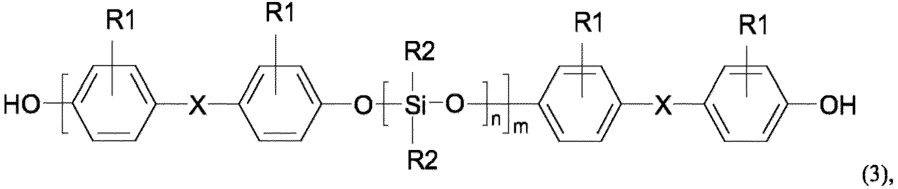
wobei R1 für Wasserstoff, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SOz-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht,
X bevorzugt für eine Einfachbindung, C₁- bis C₅-Alkylen, C₂- bis Cs-Alkyliden, C₅- bis C₁₂-Cycloalkyliden, -O-, -SO- -CO-, -S-, -SOz-, besonders bevorzugt steht X für eine Einfachbindung, Isopropyliden, C₅- bis C₁₂-Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 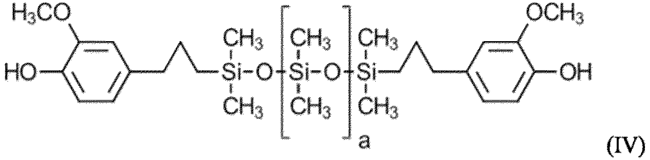 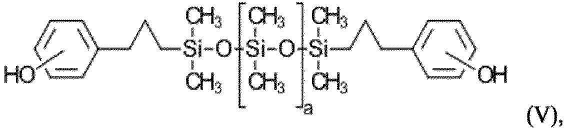 bevorzugt (Va) 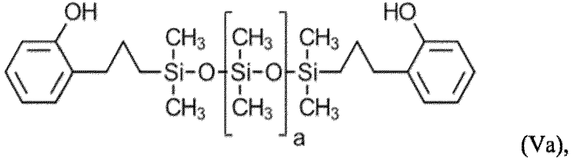 oder 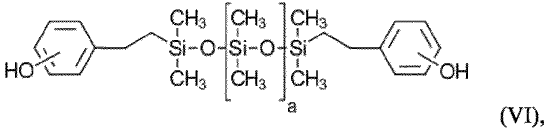 wobei a in Formel (IV), (V) und (VI) für eine durchschnittliche Zahl von 10 bis 400, bevorzugt 10 bis 100 und besonders bevorzugt für 15 bis 50 steht.

Dabei ist es ebenso bevorzugt, dass mindestens zwei gleiche oder verschiedene der Siloxanblöcke der allgemeinen Formeln (IV), (V) oder (VI) über Terephthalsäure und/oder Isophthalsäure miteinander unter Ausbildung von Estergruppen verknüpft sind.

Ebenso ist es bevorzugt, wenn in der Formel (1a) p = 0 ist, V für C₃-Alkylen steht, r = 1 ist, Z für C₂-Alkylen steht, R⁸ und R⁹ für Methyl stehen, q = 1 ist, W für C₃-Alkylen steht, m = 1 ist, R⁵ für Wasserstoff oder C₁- bis C₄-Alkyl, vorzugsweise für Wasserstoff oder Methyl, steht, R⁶ und R⁷ jeweils unabhängig voneinander für Ci- bis C₄-Alkyl, vorzugsweise für Methyl stehen und o für 10 bis 500 steht.

Copolycarbonate mit Monomereinheiten der Formel (IV) und insbesondere auch deren Herstellung sind in der WO 2015/052106 A2 beschrieben.

Die thermoplastischen Polycarbonate einschließlich der thermoplastischen, aromatischen Polyestercarbonate haben bevorzugt gewichtsmittlere Molekulargewichte M_{w} von 15.000 g/mol bis 40.000 g/mol, weiter bevorzugt bis 34.000 g/mol, besonders bevorzugt von 17.000 g/mol bis 33.000 g/mol, insbesondere von 19.000 g/mol bis 32.000 g/mol, ermittelt durch Gelpermeationschromotographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

Zur Einarbeitung von Additiven wird die Komponente A bevorzugt in Form von Pulvern, Granulaten oder von Gemischen aus Pulvern und Granulaten eingesetzt.

### Komponente B

Erfindungsgemäße Zusammensetzungen enthalten 3,0 Gew.-% bis 30,0 Gew.-%, bevorzugt 4,0 Gew.-% bis 25 Gew.-%, besonders bevorzugt 5 Gew.-% bis 20 Gew.-%, ganz besonders bevorzugt 5,0 Gew.-% bis 20,0 Gew.-%, insbesondere 5,0 Gew.-% bis 15 Gew.-%, äußerst bevorzugt 10 bis 13 Gew.-%, Titandioxid.

Das Titandioxid gemäß Komponente B umfasst nicht auf den Glasplättchen als Beschichtung verwendetes Titandioxid.

Das Titandioxid gemäß Komponente B der erfindungsgemäßen Zusammensetzungen weist bevorzugt eine mittlere Partikelgröße D₅₀, bestimmt mittels Rasterelektronenmikroskopie (STEM), von 0,1 bis 5 µm, bevorzugt 0,2 µm bis 0,5 µm, auf. Das Titandioxid kann aber auch eine andere Partikelgröße aufweisen, z.B. eine mittlere Partikelgröße D₅₀, bestimmt mittels Rasterelektronenmikroskopie (STEM), von ≥ 0,5 µm, etwa 0,65 bis 1,15 µm.

Das Titandioxid weist bevorzugt eine Rutilstruktur auf.

Das erfindungsgemäß eingesetzte Titandioxid ist ein Weißpigment, Ti(IV)Oz. Farbige Titandioxide enthalten neben Titan noch Elemente wie Sb, Ni, Cr in signifikanten Mengen, so dass sich ein anderer Farbeindruck als "weiß" ergibt. Es versteht sich, dass beim Weißpigment Titandioxid auch Spuren anderer Elemente als Verunreinigungen enthalten sein können. Diese Mengen sind jedoch so gering, dass das Titandioxid hierdurch keinen Farbstich bekommt.

Geeignete Titandioxide sind bevorzugt solche, welche nach dem Chlorid-Verfahren hergestellt, hydrophobiert, speziell nachbehandelt und für den Einsatz in Polycarbonat geeignet sind. Grundsätzlich kann in erfindungsgemäßen Zusammensetzungen statt beschlichtetem Titandioxid auch unbeschlichtetes Titandioxid oder eine Mischung aus beidem eingesetzt werden. Der Einsatz von beschlichtetem Titandioxid ist jedoch bevorzugt.

Zu möglichen Oberflächenmodifikationen von Titandioxid zählen anorganische und organische Modifikationen. Hierzu zählen z.B. Oberflächenmodifikationen auf Aluminium- oder Polysiloxanbasis. Eine anorganische Beschichtung kann 0,0 Gew.-% bis 5,0 Gew.-% Siliciumdioxid und/oder Aluminiumoxid enthalten. Eine Modifikation auf organischer Basis kann 0,0 Gew.-% bis 3,0 Gew.-% eines hydrophoben Benetzungsmittels enthalten. Das Titandioxid hat bevorzugt eine Ölabsorptionszahl, bestimmt nach DIN EN ISO 787-5:1995-10, von 12 bis 18 g/100 g Titandioxid, weiter bevorzugt von 13 bis 17 g/ 100 g Titandioxid, besonders bevorzugt von 13,5 bis 15,5 g/100 g Titandioxid.

Besonders bevorzugt ist Titandioxid mit der Normbezeichnung R2 gemäß DIN EN ISO 591-1 :2001-08 welches mit Aluminium- und/oder Siliciumverbindungen stabilisiert ist und einen Titandioxid-Gehalt von mindestens 96,0 Gew.-% aufweist. Derartige Titandioxide sind unter den Markennamen Kronos 2233 und Kronos 2230 erhältlich.

### Komponente C

Bei Komponente C der erfindungsgemäßen Zusammensetzungen handelt es sich um eine Titandioxid-Beschichtung umfassende Glas-Plättchen. "Eine Titandioxid-Beschichtung umfassende Glasplättchen" bedeutet, dass die Titandioxid-Beschichtung als Teil der Glasplättchen angesehen wird, d.h. dass sich Größenangaben, sofern nicht explizit anders angegeben, auf die Partikel gemäß Komponente C in ihrer Gesamtheit beziehen, also auf die Glaskerne zusammen mit ihrer Titandioxid-Beschichtung. Die eingesetzten Glas-Plättchen sind splitterförmig, wobei die Dicke deutlich geringer ist als die Länge. Die Glas-Plättchen verfügen bevorzugt über eine möglichst glatte Oberfläche.

Die Beschichtung könnte grundsätzlich auf Basis verschiedener Oxide erfolgen, beispielweise auch auf Basis verschiedener Eisenoxide wie Fe₂O₃ oder Fe₃O₄, die allerdings eine intensive Eigenfarbe aufweisen und damit für hochreflektierende weiße Compounds nicht geeignet sind. Für derartige Anwendungen kommt nur eine Titandioxid-Beschichtung der Glasplättchen zum Einsatz.

Die Glas-Plättchen - rein bezogen auf das Glas, ohne Titandioxid-Beschichtung- enthalten bevorzugt 59 Gew.-% bis 65 Gew.-% SiOz, 8 Gew.-% bis 15 Gew.-% Al₂O₃, 20 Gew.-% bis 30 Gew.-% Calciumoxid CaO und 1 Gew.-% bis 5 Gew.-% Magnesiumoxid MgO. Die Glaszusammensetzung ist bevorzugt frei von Borsäure und anderen Boraten sowie frei von Zinkverbindungen. Weiter bevorzugt sind in Summe > 0 bis weniger als 2 Gew.-% Lithiumoxid, Natriumoxid und Kaliumoxid enthalten sowie 0 bis 5 Gew.-% Titandioxid. Noch weiter bevorzugt sind im Wesentlichen auch kein Bariumoxid, Strontiumoxid und Zirkoniumoxid enthalten. Ganz besonders bevorzugt ist 47 Gew.-% ≤ SiOz - Al₂O₃ ≤ 57 Gew.-%. Geeignete Glas-Plättchen und deren Herstellung sind insbesondere in der EP 1829833 A1 beschrieben.

Die Oberflächen der Glaskerne sind mit einem oder mehreren Metalloxiden beschichtet, wobei Titandioxid Teil der Beschichtung ist. Es versteht sich, dass Komponente C in einer erfindungsgemäßen thermoplastischen Zusammensetzung auch eine Mischung einer oder mehrerer Arten von eine Titandioxid-Beschichtung umfassenden Glasplättchen sein kann.

Besonders bevorzugt ist Titandioxid vom Rutil-Typ. Die Dicke der TiOz-Beschichtung ist bevorzugt so dünn, dass ein möglichst neutrales weiß reflektiert wird.

Die Partikelgrößenverteilungen der Glas-Plättchen können mit Hilfe der Rasterelektronenmikroskopie (REM) bestimmt werden. Bei der Auswertung wird der äquivalente Kreisdurchmesser (ECD) berechnet. Die Äquivalenz bezieht sich auf die Fläche eines Partikels, projiziert auf eine Unterlage. Der ECD-Wert ist dabei der Durchmesser eines Kreises, der eine Fläche besitzt, die gleich der Fläche des Partikels ist. Die ECD der einzelnen Glas-Plättchen liegen bevorzugt zwischen 0,5 µm und 250 µm, weiter bevorzugt zwischen 1 µm und 200 µm, besonders bevorzugt zwischen 20 µm und 175 µm, ganz besonders bevorzugt zwischen 30 µm und 150 µm. Der durchschnittliche ECD (D50-Wert, bestimmt mittels Rasterelektronenmikroskopie (STEM)) liegt bevorzugt zwischen 5 µm und 25 µm. Das Aspektverhältnis (Länge:Breite) liegt bevorzugt zwischen 1 und 5, weiter bevorzugt zwischen 1,5 und 4, besonders bevorzugt zwischen 2 und 3.

Die Dicke der eine Titandioxid-Beschichtung umfassenden Glas-Plättchen, bestimmt mittels Rasterelektronenmikroskopie, liegt bevorzugt im Bereich von 0,3 µm bis 12 µm, weiter bevorzugt von 0,4 µm bis 10 µm, noch weiter bevorzugt von 0,5 µm bis 6 µm, besonders bevorzugt zwischen 1 µm und 3 µm, ganz besonders bevorzugt zwischen 1,0 und 2,0 µm.

Zur Bestimmung der Dicke der Titandioxid-Beschichtung der Glas-Plättchen kann Rasterelektronenmikroskopie in Kombination mit energiedisperser Röntgenspektrometrie eingesetzt werden. Die Glas-Plättchen sind homogen mit Titandioxid beschichtet. "Homogen" bedeutet hier, dass die Beschichtung über die gesamte Oberfläche des Glases annähernd gleich dick ist, wobei "annähernd" bevorzugt eine maximale Abweichung an der einzelnen Stelle von ± 20 %, weiter bevorzugt ± 10 %, noch weiter bevorzugt ± 5 % von der mittleren Dicke der Oberflächenbeschichtung bedeutet. Die Dicke der Beschichtung beträgt bevorzugt zwischen 50 nm und 400 nm, bevorzugt zwischen 80 nm und 350 nm und besonders bevorzugt zwischen 100 nm und 300 nm, ganz besonders bevorzugt zwischen 120 nm und 200 nm.

Der Anteil der eine Titandioxid-Beschichtung umfassenden Glas-Plättchen an der gesamten auf Polycarbonat-basierenden Zusammensetzung beträgt 0,001 Gew.-% bis 0,25 Gew.-%, bevorzugt 0,001 Gew.-% bis 0,15 Gew.-%, weiter bevorzugt 0,004 Gew.-% bis 0,1 Gew.-%, noch weiter bevorzugt 0,004 Gew.-% bis 0,10 Gew.-%, besonders bevorzugt 0,005 Gew.-% bis 0,02 Gew.-%, ganz besonders bevorzugt 0,006 Gew.-% bis 0,010 Gew.-%.

### Komponente D

Zusätzlich sind optional weitere Additive, bevorzugt bis zu 30 Gew.-%, weiter bevorzugt bis zu 10,0 Gew.-%, noch weiter bevorzugt 0,01 Gew.-% bis 6,0 Gew.-%, besonders bevorzugt 0,1 Gew.-% bis 3,0 Gew.-%, ganz besonders bevorzugt 0,2 Gew.-% bis 1,0 Gew.-%, insbesondere bis 0,5 Gew.-% sonstige übliche Additive ("weitere Additive") enthalten. Die Gruppe der weiteren Additive umfasst kein Titandioxid, da dieses bereits als Komponente B beschrieben ist. Ebenso umfasst die Gruppe der weiteren Additive keine eine Titandioxid-Beschichtung umfassenden Glas-Plättchen gemäß Komponente C.

Solche weiteren Additive, wie sie üblicherweise Polycarbonaten zugesetzt werden, sind insbesondere Thermostabilisatoren, Flammschutzmittel, Antioxidantien, Entformungsmittel, Antitropfmittel, etwa Polytetrafluorethylen (Teflon) oder SAN-gekapseltes PTFE (z.B. Blendex 449), UV-Absorber, IR-Absorber, Schlagzähmodifikatoren, Antistatika, optische Aufheller, von den Komponenten B und C verschiedene Füllstoffe, z. B. Talk, Quarz, Lichtstreumittel, Hydrolysestabilisatoren, Verträglichkeitsvermittler, von Komponente B verschiedene anorganische Pigmente und/oder Additive zur Lasermarkierung, insbesondere in den für Polycarbonat-basierte Zusammensetzungen üblichen Mengen. Derartige Additive sind beispielsweise in EP-A 0 839 623, WO-A 96/15102, EP-A 0 500 496 oder im "Plastics Additives Handbook", Hans Zweifel, 5th Edition 2000, Hanser Verlag, München beschrieben. Diese Additive können einzeln oder auch im Gemisch zugesetzt werden. Es versteht sich, dass nur solche Additive und nur in solchen Mengen zugesetzt werden dürfen, wenn sie sich nicht signifikant negativ auf den erfindungsgemäßen Effekt der verbesserten Reflexion auswirken. Ruß z.B. ist bevorzugt nicht enthalten. Es muss weiterhin eine Verbesserung der Reflexion gegenüber solchen entsprechenden Referenzzusammensetzungen zu beobachten sein, die sich lediglich dadurch, dass sie keine Glas-Plättchen gemäß Komponente C enthalten, von der erfindungsgemäßen Zusammensetzung unterscheiden.

Bevorzugt sind die Additive ausgewählt aus der Gruppe der Thermostabilisatoren, Flammschutzmittel, Antioxidantien, Entformungsmittel, Antitropfmittel, UV-Absorber, IR-Absorber, Schlagzähmodifikatoren, Antistatika, optischen Aufheller, von Komponente B und C verschiedenen Füllstoffe, Lichtstreumittel, Hydrolysestabilisatoren, Umesterungsinhibitoren, Verträglichkeitsvermittler und/oder Additiven zur Lasermarkierung. Sofern Additive enthalten sind, können ein oder mehrere dieser Additive die Komponente D in einer erfindungsgemäßen Zusammensetzung darstellen.

Die weiteren Additive sind besonders bevorzugt solche aus der Gruppe, bestehend aus Flammschutzmitteln, Antitropfmitteln, UV-Absorbern, Thermostabilisatoren, Antioxidantien, Antistatika, Entformungsmitteln, Schlagzähmodifikatoren, Umesterungsinhibitoren.

Die Zusammensetzungen enthalten weiter bevorzugt mindestens ein Flammschutzmittel, ausgewählt aus der Gruppe der Alkali-, Erdalkali-, Ammoniumsalze von aliphatischen bzw. aromatischen Sulfonsäure-, Sulfonamid- und Sulfonimidderivaten, oder auch Kombinationen aus diesen.

Unter "Derivaten" werden erfindungsgemäß an dieser und anderer Stelle solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Besonders bevorzugt umfassen erfindungsgemäße Zusammensetzungen als Flammschutzmittel ein oder mehrere Verbindungen, ausgewählt aus der Gruppe, bestehend aus Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliumdiphenylsulfonsulfonat, Natrium- oder Kalium-2-formylbenzolsulfonat, Natrium- oder Kalium-(N-benzolsulfonyl)-benzolsulfonamid oder deren Mischungen.

Bevorzugt werden Natrium- oder Kaliumperfluorbutansulfat, Natrium- oder Kaliumperfluoroctansulfat, Natrium- oder Kaliumdiphenylsulfonsulfonat oder deren Mischungen eingesetzt. Ganz besonders bevorzugt ist Kaliumperfluor-1-butansulfonat, welches kommerziell erhältlich ist, unter anderem als Bayowet^{®} C4 von der Firma Lanxess, Leverkusen, Deutschland.

Die Mengen von Alkali-, Erdalkali- und/oder Ammoniumsalzen von aliphatischen bzw. aromatischen Sulfonsäure-, Sulfonamid- und Sulfonimidderivaten in der Zusammensetzung, sofern diese eingesetzt werden, betragen bevorzugt insgesamt 0,05 Gew.-% bis 0,5 Gew.-%, weiter bevorzugt 0,06 Gew.-% bis 0,3 Gew.-%, besonders bevorzugt 0,06 Gew.-% bis 0,2 Gew.-%, ganz besonders bevorzugt 0,065 Gew.-% bis 0,12 Gew.-%.

Zusätzlich oder alternativ enthaltene, bevorzugte Additive sind Thermostabilisatoren.

Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Es können auch Mischungen von verschiedenen Verbindungen aus einer dieser Untergruppen eingesetzt werden, z.B. zwei Phosphite.

Als Thermostabilisatoren werden bevorzugt Phosphor-Verbindungen mit der Oxidationszahl +III, insbesondere Phosphine und/oder Phosphite, eingesetzt.

Als Thermostabilisatoren eignen sich besonders bevorzugt Triphenylphosphin, Tris-(2,4-di-tert-butylphenyl)phosphit (Irgafos^{®} 168), Tetrakis-(2,4-di-tert-butylphenyl)-[1,1-biphenyl]-4,4'-diylbis-phosphonit, Octadecyl-3-(3,5-di-tert-butyl-4-hydroxyphenyl)-propionat (Irganox^{®} 1076), Bis-(2,4-dicumylphenyl)-pentaerythritoldiphosphit (Doverphos^{®} S-9228), Bis-(2,6-di-tert-butyl-4-methylphenyl)-pentaerythritoldiphosphit (ADK STAB PEP-36).

Sie werden allein oder im Gemisch, z. B. Irganox^{®} B900 (Gemisch aus Irgafos^{®} 168 und Irganox^{®} 1076 im Verhältnis 4:1) oder Doverphos^{®} S-9228 mit Irganox^{®} B900 bzw. Irganox^{®} 1076, eingesetzt.

Die Thermostabilisatoren werden bevorzugt in Mengen bis zu 1,0 Gew.-%, weiter bevorzugt 0,003 Gew.-% bis 1,0 Gew.-%, noch weiter bevorzugt 0,005 Gew.-% bis 0,5 Gew.-%, besonders bevorzugt 0,01 Gew.-% bis 0,2 Gew.-%, eingesetzt.

Bevorzugte Additive sind auch spezielle UV-Stabilisatoren, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF SE, Ludwigshafen), 2-(2'-Hydroxy-5'-(tert.-octyl)-phenyl)-benzotriazol (Tinuvin^{®} 329, BASF SE, Ludwigshafen), Bis-(3-(2H-benztriazolyl)-2-hydroxy-5-tert.-octyl)methan (Tinuvin^{®} 360, BASF SE, Ludwigshafen), 2-(4,6-Diphenyl-1,3,5-triazin-2-yl)-5-(hexyloxy)-phenol (Tinuvin^{®} 1577, BASF SE, Ludwigshafen), 2-(5chloro-2H-benzotriazol-2-yl)-6-(1,1-dimethylethyl)-4-methyl-phenol (Tinuvin^{®} 326, BASF SE, Ludwigshafen), sowie Benzophenone wie 2,4-Dihydroxybenzophenon (Chimasorb^{®} 22 , BASF SE, Ludwigshafen) und 2-Hydroxy-4-(octyloxy)-benzophenon (Chimassorb^{®} 81, BASF SE, Ludwigshafen), 2,2-Bis[[(2-cyano-1-oxo-3,3-diphenyl-2-propenyl)oxy]-methyl]-1,3-propandiylester (9CI) (Uvinul 3030, BASF SE, Ludwigshafen), 2-[2-Hydroxy-4-(2-ethylhexyl)oxy]phenyl-4,6-di(4-phenyl)phenyl-1,3,5-triazine (Tinuvin 1600, BASF SE, Ludwigshafen), Tetraethyl-2,2'-(1,4-phenylen-dimethyliden)-bismalonat (Hostavin B-Cap, Clariant AG) oder N-(2-Ethoxyphenyl)-N'-(2-ethylphenyl)-ethandiamid (Tinuvin 312, CAS-Nr. 23949-66-8, BASF SE, Ludwigshafen).

Besonders bevorzugte spezielle UV-Stabilisatoren sind Tinuvin 360, Tinuvin 329, Tinuvin 326, Tinuvin 1600, Tinuvin 312, Uvinul 3030 und/oder Hostavin B-Cap, ganz besonders bevorzugt sind Tinuvin 329 und Tinuvin 360.

Es können auch Mischungen der genannten Ultraviolett-Absorber eingesetzt werden.

Sofern UV-Absorber enthalten sind, enthält die Zusammensetzung bevorzugt Ultraviolett-Absorber in einer Menge bis 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%, bezogen auf die Gesamtzusammensetzung.

Die erfindungsgemäßen Zusammensetzungen können auch Phosphate oder Sulfonsäureester als Umesterungsinhibitoren enthalten. Bevorzugt ist Triisooctylphosphat als Umesterungsinhibitor enthalten. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.-% bis 0,03 Gew.-%, bezogen auf die Gesamtzusammensetzung, eingesetzt.

Beispiele für als Additive geeignete Schlagzähmodifikatoren sind: Acrylat-core-shell-Systeme wie ABS oder MBS oder Butadienkautschuke (Paraloid-Typen von DOW Chemical Company); Olefin-Acrylat-Copolymere wie z. B. Elvaloy^{®}-Typen von DuPont; Siliconacrylatkautschuke wie z. B. die Metablen^{®}-Typen von Mitsubishi Rayon Co., Ltd..

Ganz besonders bevorzugt ist als weiteres Additiv mindestens eines, ausgewählt aus der Gruppe, bestehend aus Thermostabilisatoren, Entformungsmitteln, Antioxidantien, Schlagzähmodifikatoren, Flammschutzmitteln, Antitropfmitteln, enthalten, insbesondere in einer Menge von 0 bis 3 Gew.-%. Dabei können auch Mischungen von zwei oder mehreren der vorgenannten Additive enthalten sein.

Die erfindungsgemäßen Zusammensetzungen sind bevorzugt frei von optischen Aufhellern.

Äußerst bevorzugt ist mindestens ein Additiv aus der Gruppe, bestehend aus Thermostabilisatoren, Flammschutzmitteln, Schlagzähmodifikatoren in den erfindungsgemäßen Zusammensetzungen enthalten. Hierbei können auch zusätzliche Additive aus der Gruppe der weiteren Additive gemäß Komponente D enthalten sein, müssen es aber nicht.

Als weiteres Additiv kann mindestens ein Antitropfmittel enthalten sein, bevorzugt in einer Menge von 0,05 Gew.-% bis 1,5 Gew.-%, insbesondere 0,1 Gew.-% bis 1,0 Gew.-%.

Die Herstellung der erfindungsgemäßen Zusammensetzungen, enthaltend die Komponenten A bis C sowie ggf. D und ggf. Blendpartner, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B, C und ggf. D, mit dem Polycarbonat oder auch mit dem ggf. vorhandenen Blendpartner, verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten der erfindungsgemäßen Zusammensetzung durch bekannte Verfahren oder als Masterbatch in das Polycarbonat, ggf. in das Polycarbonat mit Blendpartner, eingebracht werden.

Die Verwendung von Masterbatchen ist zum Einbringen der Komponenten B bis D, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Erfindungsgemäß bevorzugte thermoplastische Zusammensetzungen enthalten
A) 44,9 Gew.-% bis 95,996 Gew.-% aromatisches Polycarbonat,
B) 4,0 Gew.-% bis 25 Gew.-% Titandioxid und
C) 0,004 Gew.-% bis 0,1 Gew.-% eine Titandioxid-Beschichtung umfassende Glas-Plättchen, wobei die eine Titandioxid-Beschichtung umfassenden Glas-Plättchen einen D50-Wert, bestimmt mittels Rasterelektronenmikroskopie, zwischen 5 µm und 25 µm, ein durchschnittliches Aspektverhältnis, bestimmt mittels Rasterelektronenmikroskopie, zwischen 1 und 5 und eine Dicke, bestimmt mittels Rasterelektronenmikroskopie, zwischen 1 µm und 3 µm aufweisen,
wobei sich die Mengenangaben jeweils auf das Gesamtgewicht der thermoplastischen Zusammensetzung beziehen.

Erfindungsgemäß besonders bevorzugte thermoplastische Zusammensetzungen bestehen aus
A) 64,9 Gew.-% bis 95,996 Gew.-% aromatischem Polycarbonat,
B) 4,0 Gew.-% bis 25 Gew.-% Titandioxid und
C) 0,004 Gew.-% bis 0,1 Gew.-% eine Titandioxid-Beschichtung umfassenden Glasplättchen, wobei die eine Titandioxid-Beschichtung umfassenden Glas-Plättchen einen D50-Wert, bestimmt mittels Rasterelektronenmikroskopie, zwischen 5 µm und 25 µm, ein durchschnittliches Aspektverhältnis, bestimmt mittels Rasterelektronenmikroskopie, zwischen 2 und 3 und eine Dicke, bestimmt mittels Rasterelektronenmikroskopie, zwischen 1,0 µm und 2 µm aufweisen und wobei die durchschnittliche Dicke der Titandioxid-Beschichtung, bestimmt mittels Rasterelektronenmikroskopie in Kombination mit energiedisperser Röntgenspektrometrie, 100 nm bis 300 nm, insbesondere 120 nm bis 200 nm beträgt,
D) 0 bis 10 Gew.-% eines oder mehrerer von den Komponenten B und C verschiedener weiterer Additiv/e, ausgewählt aus der Gruppe der Thermostabilisatoren, Flammschutzmittel, Antioxidantien, Entformungsmittel, Antitropfmittel, UV-Absorber, IR-Absorber, Schlagzähmodifikatoren, Antistatika, optischen Aufheller, von Komponente B und C verschiedenen Füllstoffe, Lichtstreumittel, von Komponente B verschiedenen anorganischen Pigmente, Hydrolysestabilisatoren, Umesterungsinhibitoren, Verträglichkeitsvermittler und/oder Additiven zur Lasermarkierung,
wobei sich die Mengenangaben jeweils auf das Gesamtgewicht der thermoplastischen Zusammensetzung beziehen.

Ganz besonders bevorzugte erfindungsgemäße Zusammensetzungen bestehen aus
A) 76,99 Gew.-% bis 89,994 Gew.-% aromatischem Polycarbonat,
B) 10 Gew.-% bis 13 Gew.-% Titandioxid und
C) 0,006 Gew.-% bis 0,01 Gew.-% eine Titandioxid-Beschichtung umfassenden Glasplättchen, wobei die eine Titandioxid-Beschichtung umfassenden Glas-Plättchen einen D50-Wert, bestimmt mittels Rasterelektronenmikroskopie, zwischen 5 µm und 25 µm, ein durchschnittliches Aspektverhältnis, bestimmt mittels Rasterelektronenmikroskopie, zwischen 2 und 3 und eine Dicke, bestimmt mittels Rasterelektronenmikroskopie, zwischen 1,0 µm und 2 µm aufweisen und wobei die durchschnittliche Dicke der Titandioxid-Beschichtung, bestimmt mittels Rasterelektronenmikroskopie in Kombination mit energiedisperser Röntgenspektrometrie, 100 nm bis 300 nm, insbesondere 120 nm bis 200 nm beträgt,
D) 0 bis 10 Gew.-% eines oder mehrerer von den Komponenten B und C verschiedener weiterer Additiv/e, ausgewählt aus der Gruppe der Thermostabilisatoren, Flammschutzmittel, Antioxidantien, Entformungsmittel, Antitropfmittel, UV-Absorber, IR-Absorber, Schlagzähmodifikatoren, Antistatika, optischen Aufheller, von Komponente B und C verschiedenen Füllstoffe, Lichtstreumittel, von Komponente B verschiedenen anorganischen Pigmente, Hydrolysestabilisatoren, Umesterungsinhibitoren, Verträglichkeitsvermittler und/oder Additiven zur Lasermarkierung,
wobei sich die Mengenangaben jeweils auf das Gesamtgewicht der thermoplastischen Zusammensetzung beziehen.

Die erfindungsgemäßen Zusammensetzungen weisen bevorzugt eine Schmelze-Volumenfließrate (MVR) von 3 bis 40 cm³/(10 min), weiter bevorzugt von 6 bis 30 cm³/(10 min), noch weiter bevorzugt von 8 bis 25 cm³/(10 min), besonders bevorzugt von 9 bis 24 cm³/(10 min), bestimmt nach ISO 1133:2012-3 (Prüftemperatur 300°C, Masse 1,2 kg), auf. Die erfindungsgemäßen Zusammensetzungen werden vorzugsweise zur Herstellung von Formteilen verwendet.

Die Herstellung der Formteile erfolgt vorzugsweise durch Spritzguss, Extrusion oder aus Lösung in einem Gießprozess. Die erfindungsgemäßen Zusammensetzungen können auf üblichen Maschinen, beispielsweise auf Extrudern oder Spritzgussmaschinen, zu beliebigen Formkörpern, wie beispielsweise Folien, Platten oder Flaschen, in üblicher Weise verarbeitet werden.

Die Zusammensetzungen bzw. Formteile aus den Zusammensetzungen erscheinen dem Betrachter "strahlend-weiß". Die beschichteten Glas-Plättchen weisen eine gute Verträglichkeit zur Polycarbonatmatrix auf. Dies zeigt sich in einer unverändert hohen Schmelzestabilität der Compounds.

Die erfindungsgemäßen Zusammensetzungen sind zur Herstellung von Mehrschichtsystemen geeignet. Hierbei wird die Polycarbonat-haltige Zusammensetzung in einer oder mehreren Schicht(en) auf einen geformten Gegenstand aus einem Kunststoff aufgebracht bzw. dient selber als Substratschicht, auf welche eine oder mehrere weitere Schichten aufgebracht werden. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Die erfindungsgemäßen Zusammensetzungen sind zur Herstellung von Bauteilen im Beleuchtungssektor, wie etwa Reflektoren von Lampen, insbesondere LED-Lampen oder LED-Arrays, im Automotive-Bereich, etwa Scheinwerfer- und Rücklichtreflektoren, von Teilen für Blinker, Blenden, Schalter, oder -rahmen, sowie zur Herstellung von Rahmen bzw. Rahmenteilen bzw. Gehäuse- oder Gehäuseteilen im EE (Elektro/Elektronik)- und IT-Bereich geeignet. Aufgrund der sehr guten Reflexionswerte werden die erfindungsgemäßen Zusammensetzungen bevorzugt zur Herstellung von Reflektoren eingesetzt. Diese und sonstige Formteile, bestehend aus den erfindungsgemäßen Zusammensetzungen oder umfassend - z.B. bei Mehrkomponentenspritzguss - diese, einschließlich der Formteile, die eine Schicht eines Mehrschichtsystems bzw. Schichten von Mehrschichtsystemen bzw. ein Element eines oben genannten Bauteils darstellen oder ein solches Bauteil sind, aus ("bestehend aus") diesen erfindungsgemäßen Zusammensetzungen, sind ebenfalls Gegenstand dieser Anmeldung. Die erfindungsgemäßen Zusammensetzungen sind auch in Form von Filamenten, als Granulat oder Pulver einsetzbar als Material im 3D-Druck.

Die für die erfindungsgemäßen Zusammensetzungen vorstehend beschriebenen Ausführungsformen gelten - soweit anwendbar - auch für die erfindungsgemäße Verwendung der Komponente C, also die Verwendung zur Verbesserung der Reflexion.

Die nachfolgenden Beispiele sollen die Erfindung illustrieren.

### Beispiele

### 1. Beschreibung der Rohstoffe und Prüfmethoden

Die in den folgenden Beispielen beschriebenen Polycarbonatzusammensetzungen wurden auf einem Extruder ZE 25 der Fa. Berstorff mit einem Durchsatz von 10 kg/Std. durch Compoundierung hergestellt. Die Schmelzetemperatur betrug 275 °C.

**Komponente A1:** Lineares Polycarbonat auf Basis von Bisphenol A mit einer Schmelze-Volumenfließrate MVR von 19 cm³/(10 min) (gemäß ISO 1133:2012-03, bei einer Prüftemperatur 300°C und 1,2 kg Belastung). Das Produkt enthält 250 ppm Triphenylphosphin als Komponente D1. **Komponente A2:** Lineares Polycarbonat auf Basis von Bisphenol A in Pulverform mit einer Schmelze-Volumenfließrate MVR von 19 cm³/(10 min) (gemäß ISO 1133:2012-03, bei einer Prüftemperatur 300°C und 1,2 kg Belastung).

**Komponente B:** Titandioxid Kronos 2230 der Firma Kronos Titan GmbH, Leverkusen.

**Komponente C1:** Titandioxid (Rutil-Typ) beschichtete Glas-Plättchen Metashine Microglass GT 1020RS der Firma Nippon Sheet Glass Co., Ltd. D50-Wert: 6,2 µm. Durchschnittliches Aspektverhältnis: 2,31. Die Dicke der Glasplättchen (ohne Beschichtung) liegt bei etwa 1,3 µm, die Dicke der Titandioxid-Schicht bei 149 nm. Die Gesamtdicke der Titandioxid-beschichteten Glasplättchen liegt bei etwa 1,6 µm.

**Komponente C2:** Titandioxid (Rutil-Typ) beschichtete Glas-Plättchen Metashine Microglass GT 1080RS der Firma Nippon Sheet Glass Co., Ltd. D50-Wert: 23,2 µm. Durchschnittliches Aspektverhältnis: 2,89. Die Dicke der Glasplättchen (ohne Beschichtung) liegt bei etwa 1,6 µm, die Dicke der Titandioxid-Schicht bei 164 nm. Die Gesamtdicke der Titandioxid-beschichteten Glasplättchen liegt bei etwa 1,9 µm.

**Komponente D1:** Triphenylphosphin, kommerziell erhältlich bei der BASF SE, Ludwigshafen.

Die Bestimmung des **Schmelze-Volumenfließrate (MVR)** erfolgte nach ISO 1133:2012-03 (bei einer Prüftemperatur von 300 °C, Masse 1,2 kg) mit dem Gerät Zwick 4106 der Firma Zwick Roell. Zusätzlich wurde der MVR nach 20 Minuten Vorwärmzeit gemessen (IMVR20'). Dies ist ein Maß für die Schmelzestabilität unter erhöhtem thermischem Stress.

Die Bestimmung des **Aschegehaltes** erfolgte nach DIN 51903:2012-11 (850°C, 30 min halten).

Das totale Reflexionsspektrum wurde mit einem Spektralphotometer auf Basis der Norm ASTM E 1331-04 gemessen. Das totale Transmissionsspektrum wurde mit einem Spektralphotometer auf Basis der Norm ASTM E 1348-15 gemessen.

Aus dem so erhaltenen Transmissions- oder Reflexionsspektrum wurden die **visuelle Transmission Ty** (nach Lichtart D65, Beobachter 10°) oder die **visuelle Reflexion Ry** (nach Lichtart D65, Beobachter 10°) jeweils nach ASTM E 308-08 berechnet. Die gilt auch für die **Farbwerte L*a*b*.**

Der **Glanz** wurde nach ASTM D 523-14 (2018) bestimmt.

Der **Yellowness-Index (Y.I.)** wurde nach ASTM E 313-10 (Beobachter: 10° / Lichtart: D65) bestimmt.

Erfindungsgemäße Versuche sind in der nachfolgenden Tabelle mit "E" bezeichnet, Vergleichsversuche mit "V".

**Tabelle 1:**

| **Beispiel** | | | **V-1** | **E-2** | **E-3** | **E-4** | **V-5** | **V-6** |
|---|---|---|---|---|---|---|---|---|
| **Komponente** | **Komponente** | | **Gew.-%** | **Gew.-%** | **Gew.-%** | **Gew.-%** | **Gew.-%** | **Gew.-%** |
| **A1** | | | 80,000 | 80,000 | 80,000 | 80,000 | 80,000 | 80,000 |
| **A2** | | | 8,000 | 7,994 | 7,992 | 7,990 | 7,500 | 7,000 |
| **B** | | | 12,000 | 12,000 | 12,000 | 12,000 | 12,000 | 12,000 |
| **C1** | | | | 0,006 | 0,008 | 0,010 | 0,500 | 1,000 |

| **Prüfung** | **Bedingung** | **Norm/Einheit** | | | | | | |
|---|---|---|---|---|---|---|---|---|
| Asche-Gehalt (Mittelwert) | 850°C/0,5h | % | 11,92 | 11,99 | 12,02 | 11,92 | 12,41 | 12,73 |
| MVR | 300 °C; 1,20 kg; 7 min | cm³/[10min] | 24,2 | 24,0 | 24,8 | 25,0 | 25,3 | 23,9 |
| MVR | 300 °C; 1,20 kg; 20 min | cm³/[10min] | 27,6 | 26,4 | 26,3 | 27,2 | 25,9 | 28,1 |
| Delta MVR/IMVR20' | | | 3,4 | 2,4 | 1,5 | 2,2 | 0,6 | 4,2 |

| **Prüfung** | **Bedingung** | | | | | | | |
|---|---|---|---|---|---|---|---|---|
| Transmission | PELambda950, Photometerkugel 0°/diffus; D65; 10° | | | | | | | |
| Probendicke (ro) | | mm | 1 | 1 | 1 | 1 | 1 | 1 |
| L* (ro) | | ASTM E308 | 3,16 | 3,57 | 3,8 | 4,04 | 2,89 | 2,28 |
| a* (ro) | | ASTM E 308 | 4,72 | 4,59 | 4,54 | 4,37 | 4,72 | 5,17 |
| b* (ro) | | ASTM E308 | 16,24 | 16,2 | 16,25 | 16,27 | 16,11 | 15,9 |
| Transmission (ro) | | [%] ASTM D 1003/ ISO 13468 | 0,45 | 0,48 | 0,5 | 0,52 | 0,43 | 0,39 |
| Reflexion | Hunter Ultra-ScanPRO, diffus/8°; D65; 10° | ASTM E 1331 mit Glanz | | | | | | |
| Probendicke (ro) | | mm | 2 | 2 | 2 | 2 | 2 | 2 |
| L* (ro) | | | 98,37 | 98,42 | 98,45 | 98,45 | 98,34 | 98,26 |
| a* (ro) | | | -0,62 | -0,62 | -0,62 | -0,62 | -0,61 | -0,61 |
| b* (ro) | | | 2,12 | 2,14 | 2,14 | 2,13 | 2,13 | 2,16 |
| Reflexion (ro) | | % | 95,83 | 95,96 | 96,04 | 96,04 | 95,77 | 95,58 |
| Yellowness-Index (ro) | | | 3,46 | 3,47 | 3,49 | 3,46 | 3,48 | 3,54 |
| Glanz60° (ro) | | | 102 | 102 | 101 | 101 | 96 | 92 |

Der Zusatz geringer Mengen der Glas-Plättchen C1 führt zu einer deutlichen Verbesserung der Reflexion (E-2 bis E-4 im Vergleich mit V-1). Fließfähigkeit und Glanz bleiben auf dem gleichen Niveau. Die Transmission ist gering verbessert.

Eine Menge von 0,5 Gew.-% der Komponente C1 hat einen gegenteiligen Effekt (V-5 und V-6): Die Reflexion ist deutlich verschlechtert.

**Tabelle 2:**

| **Beispiel** | | | **V-7** | **E-8** | **E-9** | **E-10** | **V-11** | **V-12** |
|---|---|---|---|---|---|---|---|---|
| **Komponente** | | | **Gew.-%** | **Gew.** % | **Gew.** % | **Gew.** % | **Gew.** % | **Gew.** % |
| A1 | | | 80,000 | 80,000 | 80,000 | 80,000 | 80,000 | 80,000 |
| A2 | | | 8,000 | 7,994 | 7,992 | 7,990 | 7,500 | 7,000 |
| B | | | 12,000 | 12,000 | 12,000 | 12,000 | 12,000 | 12,000 |
| C2 | | | | 0,006 | 0,008 | 0,010 | 0,500 | 1,000 |

| **Prüfung** | **Bedingung** | **Norm/Einheit** | | | | | | |
|---|---|---|---|---|---|---|---|---|
| Asche-Gehalt (Mittelwert) | 850°C/0,5h | % | 11,96 | 12,04 | 11,72 | 11,76 | 12,38 | 12,74 |
| MVR | 300 °C; 1,20 kg; 7 min | cm³/[10min] | 24,7 | 23,1 | 23,7 | 24,8 | 24,7 | 26,3 |
| MVR | | cm³/[10min] | 26,5 | 27 | 26,5 | 26,3 | 27,4 | 33,9 |
| Delta MVR/IMVR20' | 300 °C; 1,20 kg; 20 mm | | 1,8 | 3,9 | 2,8 | 1,5 | 2,7 | 7,6 |

| **Prüfung** | **Bedingung** | | | | | | | |
|---|---|---|---|---|---|---|---|---|
| Transmission | PELambda950, Photometerkugel 0°/diffus; D65; 10° | | | | | | | |
| Probendicke (ro) | | mm | 1 | 1 | 1 | 1 | 1 | 1 |
| L* (ro) | | ASTM E 308 | 2,74 | 3,13 | 3,1 | 3,56 | 2,26 | 1,71 |
| a* (ro) | | ASTM E 308 | 4,86 | 4,7 | 4,68 | 4,66 | 5,12 | 5,37 |
| b* (ro) | | ASTM E 308 | 15,99 | 16,31 | 16,18 | 16,7 | 16,19 | 15,82 |
| Transmission (ro) | | [%] ASTM D 1003/ ISO 13468 | 0,42 | 0,45 | 0,45 | 0,48 | 0,39 | 0,36 |
| Reflexion | Hunter Ultra-ScanPRO, diffus/8°; D65; 10° | ASTM E 1331 mit Glanz | | | | | | |
| Probendicke (ro) | | mm | 2 | 2 | 2 | 2 | 2 | 2 |
| L* (ro) | | | 98,31 | 98,37 | 98,39 | 98,4 | 98,26 | 98,14 |
| a* (ro) | | | -0,6 | -0,61 | -0,61 | -0,61 | -0,59 | -0,57 |
| b* (ro) | | | 2,07 | 2,12 | 2,12 | 2,14 | 2,13 | 2,17 |
| Reflexion (ro) | | % | 95,69 | 95,85 | 95,9 | 95,93 | 95,56 | 95,28 |
| Yellowness-Index (ro) | | | 3,38 | 3,46 | 3,46 | 3,5 | 3,49 | 3,59 |
| Glanz60° (ro) | | | 100 | 100 | 100 | 100 | 97 | 93 |

Der Zusatz geringer Mengen der Glas-Plättchen C2 führt zu einer deutlichen Verbesserung der Reflexion (E-8 bis E-10 im Vergleich mit V-7). Eine Menge von Gew.-% der Glas-Plättchen bereits hat allerdings einen gegenteiligen Effekt (V-11 und V-12): Die Reflexion ist deutlich verschlechtert.

**Tabelle 3:**

| **Beispiel** | | | **V-13** | **E-14** | **E-5** | **E-16** | **E-17** |
|---|---|---|---|---|---|---|---|
| **Komponente** | | | **Gew. %** | **Gew. %** | **Gew. %** | **Gew. %** | **Gew. %** |
| A1 | | | 80,000 | 80,000 | 80,000 | 80,000 | 80,000 |
| A2 | | | 5,000 | 4,994 | 4,900 | 4,800 | 4,750 |
| B | | | 15,000 | 15,000 | 15,000 | 15,000 | 15,000 |
| C2 | | | | 0,006 | 0,100 | 0,200 | 0,250 |

| **Prüfung** | **Bedingung** | **Norm/Einheit** | | | | | |
|---|---|---|---|---|---|---|---|
| Asche-Gehalt (Mittelwert) | 850°C/0,5h | % | 14,24 | 14,97 | 15,15 | 15,28 | 15,13 |
| MVR | 300 °C; 1,20 kg; 7 min | cm³/[1 0min] | 19,3 | 25 | 24,7 | 20,7 | 19,3 |
| MVR | 300 °C; 1,20 kg; 20 min | cm³/[10min] | 19,9 | 28 | 25,4 | 24,1 | 19,7 |
| Delta MVR/IMVR20' | | | 0,6 | 3 | 0,7 | 3,4 | 0,4 |

| **Prüfung** | **Bedingung** | | | | | | |
|---|---|---|---|---|---|---|---|
| Transmission | PELambda950, Photometerkugel 0°/diffus; D65; 10° | | | | | | |
| Probendicke (ro) | | mm | 1 | 1 | 1 | 1 | 1 |
| L* (ro) | | ASTM E 308 | -2,46 | -1,28 | -0,56 | -0,22 | -0,86 |
| a* (ro) | | ASTM E 308 | 4,61 | 5,12 | 4,87 | 4,66 | 4,65 |
| b* (ro) | | ASTM E 308 | 11,44 | 13,99 | 13,91 | 13,58 | 12,5 |
| Transmission (ro) | | [%] ASTM D 1003/ ISO 13468 | 0,16 | 0,2 | 0,24 | 0,25 | 0,22 |
| Reflexion | Hunter Ultra-ScanPRO, diffus/8°; D65; 10° | ASTM E 1331 mit Glanz | | | | | |
| Probendicke (ro) | | mm | 2 | 2 | 2 | 2 | 2 |
| L* (ro) | | | 97,93 | 98,3 | 98,35 | 98,4 | 98,27 |
| a* (ro) | | | -0,57 | -0,62 | -0,62 | -0,63 | -0,58 |
| b* (ro) | | | 1,56 | 2 | 1,96 | 1,9 | 1,63 |
| Reflexion (ro) | | % | 94,74 | 95,68 | 95,80 | 95,91 | 95,58 |
| Yellowness-Index (ro) | | | 2,46 | 3,22 | 3,15 | 3,04 | 2,57 |
| Glanz60° (ro) | | | 102 | 101 | 101 | 100 | 100 |

## Patentansprüche

1. Thermoplastische Zusammensetzung, enthaltend
A) 44 Gew.-% bis 96,999 Gew.-% aromatisches Polycarbonat,
B) 3,0 Gew.-% bis 30,0 Gew.-% Titandioxid und
C) eine Titandioxid-Beschichtung umfassende Glas-Plättchen,
**dadurch gekennzeichnet, dass**
die Menge der Komponente C 0,001 Gew.-% bis 0,25 Gew.-% beträgt,
wobei sich die Mengenangaben jeweils auf das Gesamtgewicht der thermoplastischen Zusammensetzung beziehen.

2. Thermoplastische Zusammensetzung nach Anspruch 1, enthaltend
A) 44,8 Gew.-% bis 95,996 Gew.-% aromatisches Polycarbonat,
B) 4,0 Gew.-% bis 25 Gew.-% Titandioxid und
C) 0,004 Gew.-% bis 0,2 Gew.-% eine Titandioxid-Beschichtung umfassende Glas-Plättchen,
wobei sich die Mengenangaben jeweils auf das Gesamtgewicht der thermoplastischen Zusammensetzung beziehen.

3. Thermoplastische Zusammensetzung nach einem der vorhergehenden Ansprüche, wobei die eine Titandioxid-Beschichtung umfassenden Glas-Plättchen splitterförmig sind.

4. Thermoplastische Zusammensetzung nach einem der vorhergehenden Ansprüche, wobei das Titandioxid der Beschichtung der Glas-Plättchen vom Rutil-Typ ist.

5. Thermoplastische Zusammensetzung nach einem der vorhergehenden Ansprüche, wobei als aromatisches Polycarbonat ausschließlich auf Bisphenol A-basierendes Polycarbonat enthalten ist.

6. Thermoplastische Zusammensetzung nach einem der vorhergehenden Ansprüche, bestehend aus
A) 64,8 Gew.-% bis 95,996 Gew.-% aromatischem Polycarbonat,
B) 4,0 Gew.-% bis 25 Gew.-% Titandioxid und
C) 0,004 Gew.-% bis 0,2 Gew.-% eine Titandioxid-Beschichtung umfassenden Glas-Plättchen,
D) 0 bis 10 Gew.-% eines oder mehrerer von den Komponenten B und C verschiedener weiterer Additiv/e,
wobei sich die Mengenangaben jeweils auf das Gesamtgewicht der thermoplastischen Zusammensetzung beziehen.

7. Thermoplastische Zusammensetzung nach einem der vorhergehenden Ansprüche, enthaltend 0,006 Gew.-% bis 0,010 Gew.-% an Komponente C.

8. Thermoplastische Zusammensetzung nach einem der vorhergehenden Ansprüche, bestehend aus
A) 76,99 Gew.-% bis 94,994 Gew.-% aromatischem Polycarbonat,
B) 5 Gew.-% bis 20 Gew.-% Titandioxid und
C) 0,006 Gew.-% bis 0,010 Gew.-% eine Titandioxid-Beschichtung umfassenden Glas-Plättchen,
D) 0 bis 3 Gew.-% eines oder mehrerer von den Komponenten Bund C verschiedener weiterer Additiv/e,
wobei sich die Mengenangaben jeweils auf das Gesamtgewicht der thermoplastischen Zusammensetzung beziehen.

9. Thermoplastische Zusammensetzung nach einem der vorhergehenden Ansprüche, wobei als weiteres Additiv mindestens ein Additiv aus der Gruppe der Thermostabilisatoren, Flammschutzmittel, Schlagzähmodifikatoren, Umesterungsinhibitoren in der Zusammensetzung enthalten ist.

10. Thermoplastische Zusammensetzung nach einem der vorhergehenden Ansprüche, wobei die Glasplättchen einen D50-Wert, bestimmt mittels Rasterelektronenmikroskopie, zwischen 5 und 25 µm, ein durchschnittliches Aspektverhältnis, bestimmt mittels Rasterelektronenmikroskopie, zwischen 1 und 5 und eine Dicke, bestimmt mittels Rasterelektronenmikroskopie, zwischen 1 µm und 3 µm aufweisen.

11. Thermoplastische Zusammensetzung nach einem der vorhergehenden Ansprüche, wobei die gemittelte Dicke der Titandioxid-Beschichtung der Glasplättchen, bestimmt mittels Rasterelektronenmikroskopie in Kombination mit energiedisperser Röntgenspektrometrie, zwischen 50 nm und 400 nm liegt.

12. Formteil aus einer thermoplastischen Zusammensetzung nach einem der vorhergehenden Ansprüche.

13. Formteil nach Anspruch 12, wobei das Formteil ein Reflektor oder Teil eines Reflektors ist.

14. Verwendung von 0,001 Gew.-% bis 0,25 Gew.-%, bezogen auf die Gesamtzusammensetzung nach der Zugabe der Glas-Plättchen, eine Titandioxid-Beschichtung umfassender Glas-Plättchen zur Verbesserung der Reflexion von Titandioxid-haltigen Polycarbonat-Zusammensetzungen, wobei die Reflexion nach der in der Beschreibung angegebenen Methode bestimmt wird.

15. Verwendung nach Anspruch 14, wobei die Menge an den eine Titandioxid-Beschichtung umfassenden Glas-Plättchen 0,006 bis 0,010 Gew.-% beträgt.

## Claims

1. Thermoplastic composition, containing
A) 44% by weight to 96.999% by weight of aromatic polycarbonate,
B) 3.0% by weight to 30.0% by weight of titanium dioxide and
C) glass flakes comprising a titanium dioxide coating, **characterized in that**
the amount of component C is 0.001% by weight to 0.25% by weight,
wherein the reported amounts are in each case based on the total weight of the thermoplastic composition.

2. Thermoplastic composition according to Claim 1, containing
A) 44.8% by weight to 95.996% by weight of aromatic polycarbonate,
B) 4.0% by weight to 25% by weight of titanium dioxide and
C) 0.004% by weight to 0.2% by weight of glass flakes comprising a titanium dioxide coating, wherein the reported amounts are in each case based on the total weight of the thermoplastic composition.

3. Thermoplastic composition according to either of the preceding claims, wherein the glass flakes comprising a titanium dioxide coating are shard-shaped.

4. Thermoplastic composition according to any of the preceding claims, wherein the titanium dioxide of the coating of the glass flakes is of the rutile type.

5. Thermoplastic composition according to any of the preceding claims, wherein the aromatic polycarbonate present is exclusively bisphenol A-based polycarbonate.

6. Thermoplastic composition according to any of the preceding claims, consisting of
A) 64.8% by weight to 95.996% by weight of aromatic polycarbonate,
B) 4.0% by weight to 25% by weight of titanium dioxide and
C) 0.004% by weight to 0.2% by weight of glass flakes comprising a titanium dioxide coating,
D) 0% to 10% by weight of one or more further additive(s) distinct from components Band C,
wherein the reported amounts are in each case based on the total weight of the thermoplastic composition.

7. Thermoplastic composition according to any of the preceding claims, containing 0.006% by weight to 0.010% by weight of component C.

8. Thermoplastic composition according to any of the preceding claims, consisting of
A) 76.99% by weight to 94.994% by weight of aromatic polycarbonate,
B) 5% by weight to 20% by weight of titanium dioxide and
C) 0.006% by weight to 0.010% by weight of glass flakes comprising a titanium dioxide coating,
D) 0% to 3% by weight of one or more further additive (s) distinct from components Band C,
wherein the reported amounts are in each case based on the total weight of the thermoplastic composition.

9. Thermoplastic composition according to any of the preceding claims, wherein at least one additive from the group of heat stabilizers, flame retardants, impact modifiers and transesterification inhibitors is present in the composition as a further additive.

10. Thermoplastic composition according to any of the preceding claims, wherein the glass flakes have a D50 value determined by scanning electron microscopy between 5 µm and 25 µm, an average aspect ratio determined by scanning electron microscopy between 1 and 5 and a thickness determined by scanning electron microscopy between 1 µm and 3 µm.

11. Thermoplastic composition according to any of the preceding claims, wherein the average thickness of the titanium dioxide coating of the glass flakes determined by scanning electron microscopy in conjunction with energy dispersive X-ray spectrometry is between 50 nm and 400 nm.

12. Moulding made of a thermoplastic composition according to any of the preceding claims.

13. Moulding according to Claim 12, wherein the moulding is a reflector or part of a reflector.

14. Use of 0.001% by weight to 0.25% by weight, based on the total composition after addition of the glass flakes, of glass flakes comprising a titanium dioxide coating for improving the reflectance of titanium dioxide-containing polycarbonate compositions, wherein the reflectance is determined by the method specified in the description.

15. Use according to Claim 14, wherein the amount of glass flakes comprising a titanium dioxide coating is 0.006% to 0.010% by weight.

## Revendications

1. Composition thermoplastique, contenant
A) 44% en poids à 96,999% en poids de polycarbonate aromatique,
B) 3,0% en poids à 30,0% en poids de dioxyde de titane et
C) des plaquettes de verre comprenant un revêtement de dioxyde de titane,
**caractérisée en ce que**
la quantité de composant C est de 0,001% en poids à 0,25% en poids,
les indications de quantité se rapportant à chaque fois au poids total de la composition thermoplastique.

2. Composition thermoplastique selon la revendication 1, contenant
A) 44,8% en poids à 95,996% en poids de polycarbonate aromatique,
B) 4,0% en poids à 25% en poids de dioxyde de titane et
C) 0,004% en poids à 0,2% en poids de plaquettes de verre comprenant un revêtement de dioxyde de titane, les indications de quantité se rapportant à chaque fois au poids total de la composition thermoplastique.

3. Composition thermoplastique selon l'une des revendications précédentes, les plaquettes de verre comprenant un revêtement de dioxyde de titane étant sous forme d'éclats.

4. Composition thermoplastique selon l'une des revendications précédentes, le dioxyde de titane du revêtement des plaquettes de verre étant de type rutile.

5. Composition thermoplastique selon l'une des revendications précédentes, du polycarbonate à base de bisphénol A étant exclusivement contenu en tant que polycarbonate aromatique.

6. Composition thermoplastique selon l'une des revendications précédentes, constituée par
A) 64,8% en poids à 95,996% en poids de polycarbonate aromatique,
B) 4,0% en poids à 25% en poids de dioxyde de titane et
C) 0,004% en poids à 0,2% en poids de plaquettes de verre comprenant un revêtement de dioxyde de titane,
D) 0 à 10% en poids d'un ou de plusieurs autres additifs différents des composants B et C,
les indications de quantité se rapportant à chaque fois au poids total de la composition thermoplastique.

7. Composition thermoplastique selon l'une des revendications précédentes, contenant 0,006% en poids à 0,010% en poids de composant C.

8. Composition thermoplastique selon l'une des revendications précédentes, constituée par
A) 76,99% en poids à 94,994% en poids de polycarbonate aromatique,
B) 5% en poids à 20% en poids de dioxyde de titane et
C) 0,006% en poids à 0,010% en poids de plaquettes de verre comprenant un revêtement de dioxyde de titane,
D) 0 à 3% en poids d'un ou de plusieurs autres additifs différents des composants B et C,
les indications de quantité se rapportant à chaque fois au poids total de la composition thermoplastique.

9. Composition thermoplastique selon l'une des revendications précédentes, au moins un additif du groupe des stabilisants thermiques, des agents ignifuges, des modificateurs choc, des inhibiteurs de transestérification étant contenu dans la composition en tant qu'autre additif.

10. Composition thermoplastique selon l'une des revendications précédentes, les plaquettes de verre présentant une valeur D50, déterminée au moyen de microscopie électronique à balayage, entre 5 et 25 µm, un rapport d'aspect moyen, déterminé au moyen de microscopie électronique à balayage, entre 1 et 5 et une épaisseur, déterminée au moyen de microscopie électronique à balayage, entre 1 µm et 3 µm.

11. Composition thermoplastique selon l'une des revendications précédentes, l'épaisseur moyenne du revêtement de dioxyde de titane des plaquettes de verre, déterminée au moyen de microscopie électronique à balayage en combinaison avec la spectrométrie à rayons X à dispersion d'énergie, étant située entre 50 nm et 400 nm.

12. Pièce façonnée en une composition thermoplastique selon l'une des revendications précédentes.

13. Pièce façonnée selon la revendication 12, la pièce façonnée étant un réflecteur ou une partie d'un réflecteur.

14. Utilisation de 0,001% en poids à 0,25% en poids, par rapport à la composition totale après l'ajout des plaquettes de verre, de plaquettes de verre comprenant un revêtement de dioxyde de titane pour l'amélioration de la réflexion de compositions de polycarbonate contenant du dioxyde de titane, la réflexion étant déterminée selon le procédé décrit dans la description.

15. Utilisation selon la revendication 14, la quantité de plaquettes de verre comprenant un revêtement de dioxyde de titane étant de 0,006 à 0,010% en poids.
